# EUROPEAN PATENT SPECIFICATION

(11) **EP 3 643 542 B1**
(45) Date of publication and mention of the grant of the patent: **19.05.2021**
(21) Application number: 19202142.6
(22) Date of filing: 09.10.2019
(51) Int. Cl.: B60G 3/20, B62D 7/06

(54) **WHEEL SUSPENSION SYSTEM FOR THE FRONT AXLE OF MOTOR VEHICLES**
RADAUFHÄNGUNGSSYSTEM FÜR DIE VORDERACHSE VON KRAFTFAHRZEUGEN
SYSTÈME DE SUSPENSION DE ROUE POUR ESSIEU AVANT DE VÉHICULES AUTOMOBILES

(30) Priority: 22.10.2018 IT 201800009669
(43) Date of publication of application: 29.04.2020
(73) Proprietor: Perri, Eugenio, 20155 Milano (IT)
(72) Inventor: Perri, Eugenio, 20155 Milano (IT)
(74) Representative: Rastelli, Franco

(56) References cited:
- WO-A1-2018/206187
- DE-A1- 10 347 579
- DE-A1-102012 102 436
- JP-A- H0 732 831
- JP-A- 2009 126 204

## Description

### TECHNICAL FIELD

The invention relates to a multilink suspension system, in particular for 4-wheeled motor vehicles, having a double swing arm hingely mounted on a swivelling pillar.

The invention is an architectural evolution of the conventional double-wishbone suspension, where the upper arm is arranged inside the wheel rim, which significantly improves steering control and ride comfort performances, while maintaining the properties of excellent kinematics, dimensional compactness and structural efficiency.

The suspension architecture complies with the drive and steering systems and can be effectively applied to both the front and rear axle of the vehicle.

### BACKGROUND OF THE INVENTION

The conventional double-wishbone suspension is a highly appreciated architecture for the front suspension of sports cars and racing vehicles, both for the excellent kinematic characteristics (Camber angle compensation, toe-in control and roll centre migration control), and for the compact and effective design that provides the location of the upper arm inner interface to the vehicle body near the longitudinal beam, allowing for an efficient and lightweight body structure and a low bonnet profile, in compliance with the protection criteria of passenger cars for the impact of the pedestrian head on the bonnet.

In this regard, alternative architectures for the front axle, such as the McPherson suspension and the SLA (Short Long Arms) suspension, a special double-wishbone suspension featuring the upper arm spaced widely apart from the lower arm and located above the wheel, are both less efficient, but have a wide spread on sedans and SUVs due to their greater longitudinal compliance at the wheel centre, related to the level of isolation of the vehicle from shock inputs induced by road irregularities, while at the same time containing the compliance at road level, which during braking affects the geometry of the steering axis by lowering the Caster angle, with a negative effect on the stability of the vehicle and the steering control.

The kinematics of conventional double-wishbone suspension therefore implies a trade-off between the handling properties of the vehicle when braking and driving comfort performance on uneven roads; this compromise can be improved by switching to the SLA suspension but with a loss of compactness, which has a negative impact on the style of the front area of the vehicle and some degradation of the kinematic features.

The above clarifies the reasons that have led car manufacturers, who do not accept the implications of McPherson or SLA suspension, to look for improvements in the suspensions design in order to increase the Caster stiffness under braking and the compliance at the wheel center, developing new devices that constitute the prior art of the invention.

We can identify some families of devices based on the technical solution provided, as described below:
*"A" Family* which provides the connection of the inner front ends of both swinging arms to the vehicle body by means of an intermediate common coupling element, exemplified by the following patents:
   GB 2192597 A (Honda) 20/01/1988
   US 5,022,673 (Honda) 11/06/1991 installed on the Acura NSX
   JP-05-085116 A (Toyota) 06/04/1993
*"B" family* which provides an intermediate supporting frame, resiliently mounted on the vehicle body or subframe, exemplified by the following patents:
   US 4,909,533 (Lotus) 20/03/1990 installed on the Elan M100 ("raft" front axle).
   GB 2270508 B (McLaren) 17/01/1996 installed on the F1 ("Ground-Plane Shear Centre" front axle).
*"C" Family* which provides an interlinking arm pivotally connected with the upper and lower arms, exemplified by the following patents:
   US 4,986,565 (BMW) 22/01/1991
   JP-0672116-A (Toyota) 15/03/1994
   US 6,123,351 (Daimler Chrysler) 26/09/2000
   US 7,694,983 B2 (MIRA) 13/04/2010
   EP 2 620 301 A1 (Volvo) 31/07/2013

The *A family* (by reference to Honda Acura NSX) features a coupling element that links the lateral strokes of resilient front bushings on the body side of both swinging arms, limiting their opposite travels under braking and therefore the Caster loss, while controlling the parallel travels, thus the longitudinal compliance at wheel centre. In order to achieve high stiffness under lateral loads, the application design provides L-shaped swing arms, with the short side arranged in the lateral direction of the vehicle close to the wheel centre and the long side extending in the longitudinal direction towards the front of the vehicle. The hinge connection of the coupling device with the vehicle body has a bulky structure arranged in front of the wheel envelope, resulting in a critical impact on the packaging volumes of the front area of the vehicle.

The *B family* (by reference to McLaren F1) includes on each side a rigid intermediate frame interposed between the suspension arms and the vehicle subframe. The inner ends of both wishbones are pivotally mounted on the intermediate frame by means of stiff cylindrical bushings, which allow the rotation of the swing arms around the longitudinal axis of the vehicle without axial compliance; the pivotal connection of the arms with the wheel carrier is obtained via spherical joints. The intermediate frame is connected with the vehicle subframe by means of resilient bushings; the orientation of their axes of maximum stiffness is studied to obtain a shear centre located on the line that joins the centers of contact patches of the front wheels to the ground, thus obtaining the desired situation in which the longitudinal stiffness of the suspension at ground level is higher than the stiffness at the wheel centre. This benefit must be considered against certain issues that limit its efficiency: the maximum compliance travel of the wheel centre is limited by the short axial stroke of the bushings that connect the intermediate frame with the vehicle subframe; moreover, to obtain high stiffness under lateral load, the bushings must be widely spaced apart, resulting in considerable overall dimensions and masses of the intermediate frame.

The *C family* replaces the upper arm of the double-wishbone suspension with a side link whose ends are pivotally connected with the vehicle subframe and with the wheel carrier by stiff bushings or spherical joints. In addition, the side link has, in its intermediate position, a spherical joint, not aligned with the line joining its ends, which connects an interlinking arm, in turn hinged to the lower wishbone. During braking, the longitudinal force applied to the outer end of the side link does not act directly on the vehicle subframe, but on the lower wishbone through the interlinking arm, reducing the loss of Caster angle to the actual angular travel of the lower wishbone around its axis, controlled by the radial stiffness of inner bushings. The shear centre is located on the mid axis of the lower wishbone, thus obtaining a longitudinal compliance at the wheel centre which is easily tunable and close to the compliance at the ground level. The ratio between the compliance at the wheel centre and at the ground level is comparable to the ratio of "A" family, but the impacts on packaging volumes are effectively reduced. The problem with the solution is due to the high torque acting on the lower arm during braking and the resulting change in steering geometry (i.e. the loss of Caster).

### SUMMARY OF THE INVENTION

The purpose of the present invention is to provide an original suspension architecture that overcomes the performance trade-offs of the conventional double-wishbone suspension, allowing to increase Caster stiffness when braking and the longitudinal compliance at the wheel centre, without impairing packaging volume and weight.

This architecture also provides additional advantages in that it maintains the Caster angle of the virtual steering axis during steering operations and integrates the components of the springing system to the suspension elements.

This and other objects, which will become more apparent hereinafter, are achieved by a front suspension for motor vehicles as defined in the enclosed claims.

### BRIEF DESCRIPTION OF THE DRAWINGS

Further characteristics and advantages of the present invention will be better highlighted through the description of a preferred but not exclusive embodiment of the invention, illustrated as a non-limitative example in the attached drawings, wherein:
Figure 1 is a schematic rear view of the front suspension assembly according to the present invention.
Figure 2 is a schematic top plan view of the suspension assembly.

### DISCLOSURE OF THE PREFERRED EMBODIMENTS

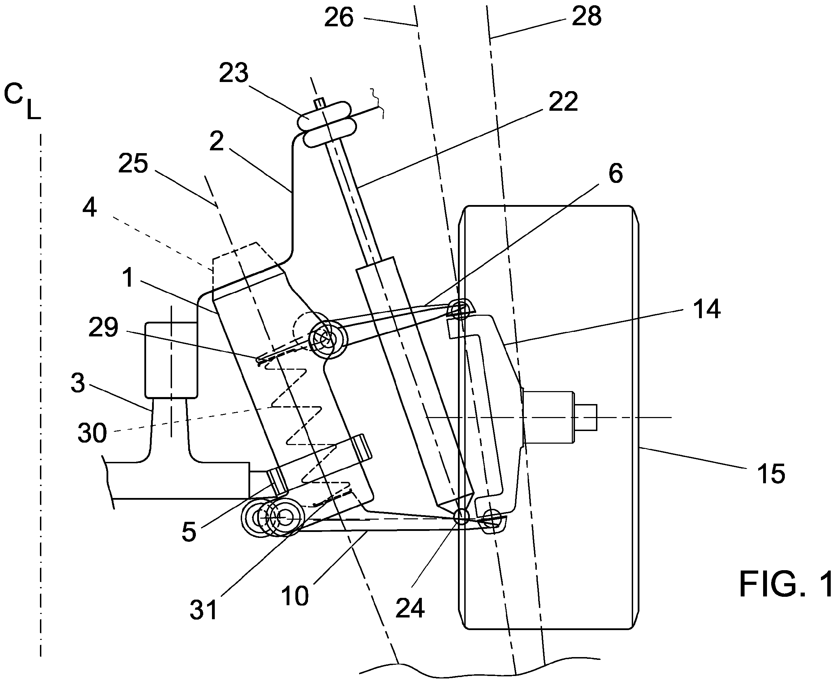

Referring to the alphanumeric symbols of the drawings, Figure 1 shows the kinematics of the double wishbone, whose inner ends are hinged to a bearing pillar, free to swivel around its central axis, inclined with respect to the vertical direction. The symbol C_{L} represents the vehicle's axis of symmetry.

The operation diagram of the springing device acting on both wishbones is shown inside the pillar.

The shock absorber, which may be of the conventional type, acts on the lower wishbone.

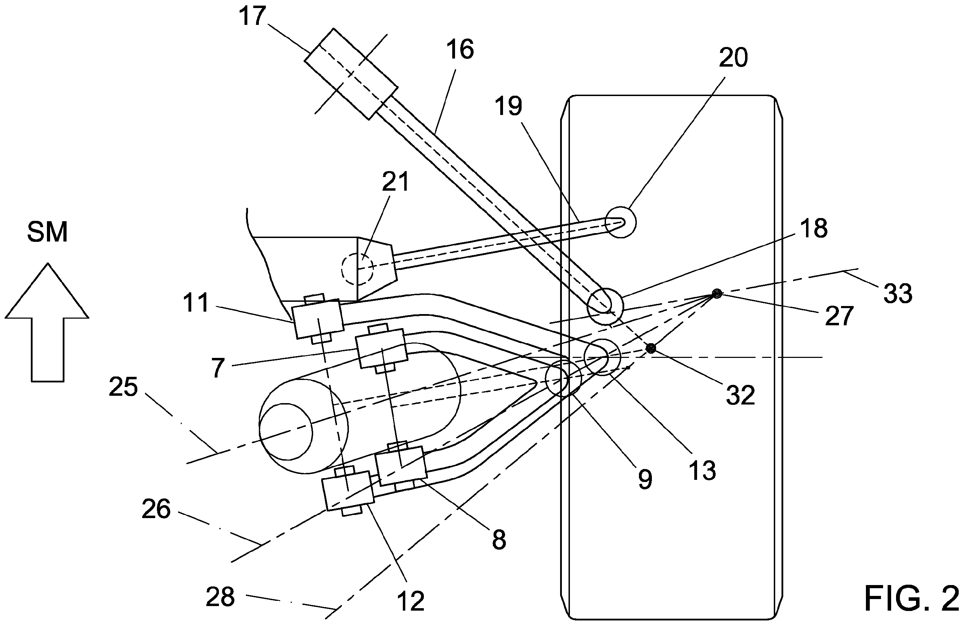

Figure 2 shows further elements of the suspension kinematics: the front link, which controls the angular travel of the bearing pillar, angled with respect to the longitudinal direction of the vehicle, with the inner end pivotally mounted on the vehicle subframe by means of a soft resilient bushing, and the steering tie rod, arranged in the lateral direction of the vehicle, controlled by the steering box located in front of the wheel axis. The direction of travel of the vehicle is indicated by the SM symbol.

The diagram shows a preferred embodiment of the invention where the front link at the outer end is pivotally connected with the wheel carrier and its extension intercepts the mid axis of the lower wishbone on the instantaneous steering axis of the wheel, to which is also oriented the mid axis of the upper wishbone at a higher elevation.

The multilink suspension system for motor vehicles, according to the present invention, comprises an upright carrier 1, hereinafter referred to as the "pillar", which is pivotally mounted on the body 2 and subframe 3 of the vehicle by means of two overlaid resilient mountings 4, 5, and which is free to swivel around their common central axis.

The upper mount 4 is a resilient bushing with high radial stiffness, conical in shape to withstand upward dynamic forces caused by road induced vertical load inputs. The housing of the top mount on the vehicle body has a high structural stiffness in all directions, both for functional reasons and for acoustic isolation.

The lower mount 5 is a resilient cylindrical bushing very stiff radially and soft in the axial direction, fixed through the outer sleeve to the subframe 3 and through the inner sleeve to the pillar 1.

According to an alternative embodiment of the invention, not illustrated in the drawings, the same task of the lower bushing 5 can be obtained by means of a mounting system consisting of two or more small bushings, arranged in such a way that their radial axes of max stiffness intercept each other on the centre of the bushing 5, the system having the same stiffness and shear centre as the lower bushing 5, that it fully replaces.

Both bushings 4, 5 are designed to permit a limited angular travel of the pillar about their common axis, with low torsional stiffness.

Two swing arms overlaid and arranged in the lateral direction of the vehicle are pivotally mounted on the pillar 1:
The upper wishbone 6 at the inner end is hinged to the pillar by means of a pair of stiff coaxial bushings 7, 8, or by an equivalent stiff hinge, arranged in the longitudinal direction of the vehicle; at the outer end the wishbone is pivotally connected with a wheel carrier 14 by means of a spherical joint 9 which, in the case of a non-steering suspension, can be replaced by a resilient bushing.

The lower wishbone 10 at the inner end is hinged to the pillar by means of a pair of stiff coaxial bushings 11, 12, or by an equivalent stiff hinge, arranged in the longitudinal direction of the vehicle; at the outer end the wishbone is pivotally connected with the wheel carrier 14 by means of a spherical joint 13 which, in the case of a non-steering suspension, can be replaced by a resilient bushing.

A wheel assembly 15 is mounted and fixed on the wheel carrier.

The suspension kinematics has two further elements:
1. A front link 16, which reacts to road-induced longitudinal loads with a compliance controlled by a very soft and large resilient bushing 17 mounted at the inner end on the vehicle subframe 3; the front link has a suitable inclination over the horizontal to optimize the anti-pitch performance of the vehicle when braking and the isolation of the vehicle body from the impact of the wheel on road irregularities.
   According to the preferred embodiment of the present invention, the front link 16 is pivotally connected at the outer end with the wheel carrier 14 by means of a spherical joint 18; its extension line defines, together with the mid axes of wishbones 6 and 10, a virtual steering axis that will be better described below.
   An alternative solution in which the spherical joint 18 of the front link 16 is connected with the lower wishbone 10, is still included in the scope of the invention, thus defining a physical steering axis formed by connecting joints 9 and 13 of the wheel carrier, whose geometry remains unchanged during the steering operation.
2. A steering tie rod 19 arranged in the lateral direction of the vehicle is pivotally connected by means of spherical joints 20, 21, respectively, at the outer end with the wheel carrier 14 and at the inner end with the steering rack or, in the case of non-steered suspension, to the vehicle subframe by means of a resilient bushing controlling the wheel toe angle under road loads induced by dynamic maneuvers.

The control of body vibrations induced by vertical dynamic road loads is managed by a conventional shock absorber 22 crossing the upper wishbone 6, which is pivotally connected to the body by an anti-vibration upper mount 23 and to the lower wishbone by a spherical joint 24.

According to a preferred embodiment of the invention, the pillar 1 integrates the vertical springing device of the suspension system. The upper wishbone 6 extends inwards inside the pillar 1 to create a lever connected with an upper plate 29 of a spring 30, while the lower wishbone 10 carries a lower plate 31 of the spring 30, aligned with the central axis 25 of the pillar, as illustrated in figure 1. Since the fulcrums of the levers/wishbones are on the opposite sides of the pillar, the spring is compressed by both plates during the bump travel of the wheel. The shortening stroke of the spring is therefore proportional to the wheel travel with a kinematic ratio equal to the sum of the lever ratios of the upper and lower wishbones. In addition, the springing forces act on the wheel carrier through the connection joints 9 and 13, both located near the wheel mid plane, thus limiting the overturning moment on the wheel and the resulting input forces on the wishbones.

The description of the preferred embodiment of the invention, represented schematically in the aforementioned figures, is to be considered illustrative or exemplary, but not restrictive of the purposes of the invention, as defined in the attached claims, which include application variants.

### Suspension elastokinematic features

The kinematics of the multilink suspension system described above, i.e. the variations in the geometric parameters of the wheel as a function of its vertical travel, is similar to that of the double-wishbone suspension, which features and performances are well known in automotive technology.

The behavior of the multilink suspension is described hereinbelow by freezing the degree of freedom of wheel vertical travel, focusing on the effects of longitudinal loads during braking (or resulting from the wheel impact on road irregularities) and on the steering behavior to show the elastokinematic benefits resulting from the introduction of the degree of freedom of swivelling of the double swing arm about the pivot axis of the pillar, compared to a conventional double wishbone suspension.

The suspension geometry provides that the swivelling axis 25 of the pillar 1 and the hinge axis 26 of the wheel carrier 14 relative to the wishbones 6 and 10 intercept each other at a pivot point 27 lying in the ground, below the wheel contact patch. The instantaneous axis of rotation of the wheel carrier, considered as the sum of the rotations around the mentioned axes 25 and 26, is bound to lie in their common plane and to point towards the pivot point 27.

When braking or hitting the wheel on road irregularities, a longitudinal load opposite to the direction of travel is applied respectively to the wheel contact patch on the ground or to the wheel centre, which leads to a compliant displacement of the joint 18 along the axis of the front link 16. As a consequence, the wheel carrier 14 moves backwards rotating around the axis 33, which is on the line connecting the pivot point 27 and the projection of the axis of the tie rod 19 on the common plane of the axes 25 and 26, which in the embodiment of the invention illustrated in Figure 2 is at infinite distance, in the direction of the tie rod 19.

Since the travel of each point of the wheel carrier is proportional to the distance from the axis of rotation 33, the stiffness at the centre of the ground contact patch under braking is greater than the stiffness at the wheel centre when hitting the wheel on road irregularities: in the embodiment of the invention illustrated in the figures, the stiffness ratio is about 2, while for a conventional double-wishbone suspension having the same geometry the ratio approximate 1/5.

Moreover, when braking, the Caster angle increases, recovering the Caster loss caused by the bushing compliance of the wishbones under longitudinal loads, thus maintaining unchanged the steering behavior during braking.

The overall result on elastokinematic performance is the exclusive compatibility of a high stiffness of the steering axis inclination under braking with great longitudinal compliance of the wheel when hitting road irregularities: in fact, the two stiffness features are coupled in a much more favorable way than the conventional double-wishbone suspension, so they are not the subject of compromise during the design and tuning of the suspension features.

During the steering operation, the steering rack stroke controls the lateral displacement of the spherical joint 20 connecting the tie rod 19 with the wheel carrier 14, consequently the wheel 15 steers by rotating around an instantaneous axis 28 which is on the line connecting the pivot point 27 and the projection point 32 of the front link 16 extension on the common plane of axes 25, 26 (Figure 2).

In the case of non-steered suspension, the compliance steering develops in a similar way, due to the displacement of the spherical joint 20 resulting from the compliance of the bushing at the inner end of the tie rod, as a consequence of the road loads applied to the wheel at the ground contact patch during Handling maneuvers.

The steering axis 28 just defined is "virtual", i.e. identified by the virtual points of intersection or geometric projection of the mid-axes of the arms (see Figure 2), instead of "physical", i.e. identified by the spherical joints 9, 13 mounted on the wheel carrier. Therefore, the virtual steering axis can be positioned appropriately close to the wheel plane 15, without any impairment of the installation of large brakes, in order to minimize the torque inputs on the steering wheel resulting from the impact of the wheel on road irregularities or from uneven driving torque inputs.

An important benefit of the invention embodiment illustrated in Figure 2 is the control of the shifting of the virtual steering axis during the steering operation.

In fact, for example, the operation of steering the outer wheel of the curve counterclockwise, controlled by the inner stroke of the steering rack, rotates both the front link 16 and the pillar 1 clockwise, thus moving backward the spherical joints 18 and 13. As a consequence, the virtual point of intersection 32 of the front link 16 and of the lower wishbone 10 mid axes, shifts backward relative to the wheel centre. At the same time, the pillar rotation moves the spherical joint 9 of the upper wishbone further back, thus recovering the Caster loss, because it rotates solidly to the pillar around the central axis 25, with a travel proportional to the vertical distance from the point of rotation 27.

This way, the kinematics leads the virtual steering axis to shift in such a way that the Caster changes are effectively controlled during steering actions.

Considering for comparative purposes the same steering operation in the case of a conventional double-wishbone suspension with two individual lower rods instead of the lower wishbone, the lower rods intersection point behaves as described above, while the upper wishbone remains where it is, so that the steering geometry cannot be maintained during steering operation, resulting in a negative impact on the steering feel and the driver's control due to the Caster loss.

A further benefit of the embodiment of the invention, illustrated in the detail of the pillar in Figure 1, is the installation inside the pillar of a metallic or air spring that acts on both swinging arms, thus achieving an optimum kinematic ratio between spring travel and wheel travel despite the distance of the spring from the wheel carrier. The overall result is the reduced height of the shock absorber upper mount and the greater freedom in the wheel package design thanks to the integration of the spring volume into the pillar.

The above shows how the invention achieves the intended aim and objects. For the unique features described above, the suspension is preferably intended for installation on the front axle of motor vehicles with or without drive, but with the proper geometry can also be considered for the rear axle.

The invention provides a multilink suspension system, particularly suited for the front axle of motor vehicles, having a double swing arm: an upper and a lower wishbone, both arranged in the lateral direction of the vehicle, and pivotally connected at the outer end by means of spherical joints with the wheel carrier and hingely mounted at the inner end by means of a pair of stiff resilient bushings on an upright carrier (the "pillar") which is free to swivel around its central axis, inclined with respect to the vertical, and pivotally connected with the body and subframe of the vehicle by means of two resilient mountings coaxial with it. The suspension kinematics also includes a front link, horizontal and angled with respect to the longitudinal direction of the vehicle, which links the wheel carrier (or, according to an alternative embodiment of the invention, the lower wishbone) with the vehicle subframe by means of a soft resilient bushing, which controls the angular travel of the pillar under longitudinal loads, acting on the ground contact of the wheel, and a steering tie rod, arranged in the lateral direction of the vehicle, which controls the steering angle of the wheel.

This multilink suspension architecture is an evolution of the conventional double-wishbone scheme, of which it preserves the excellent kinematic features, dimensional compactness and structural efficiency, while adding the degree of freedom of swivelling of the double swing arm controlled by the compliance of the front link.

The novel kinematics, as a first benefit of the invention, gives the suspension a high level of longitudinal compliance at the wheel centre without trade-off with the Caster stiffness, thus avoiding unexpected steering torque variations on the steering wheel during braking.

A second benefit of the invention, in a preferred embodiment thereof, where the front link is pivotally connected with the wheel carrier, is that the kinematics also defines a virtual steering axis, which can be placed appropriately close to the wheel mid plane without impairing the installation of large brakes and ensures optimal Caster angle that is maintained during steering, unlike the conventional double-wishbone suspension.

A third benefit is provided by a preferred embodiment of the invention in which the air spring of the suspension is integrated into the pillar, with the purpose of ensure the individual static and dynamic control of stiffness and ride height on each wheel, thus enhancing comfort and driving dynamics and saving space, weight and costs.

Naturally any materials and dimensions can be used, according to requirements.

## Claims

1. A suspension system for motor vehicles, especially for the front axle, comprising a wheel assembly (14, 15); a double swing arm: an upper wishbone (6) and a lower wishbone (10), both arranged in the lateral direction of the vehicle, each of them being connected at the outer end to the wheel carrier (14) by means of a spherical joint (9, 13) and pivotally mounted at the inner end to an upright carrier (1), **characterized in that** it is free to swivel around its pivot axis (25) which is resiliently fixed to the car body/subframe (2, 3); a front link (16) horizontal and arranged at an angle with the longitudinal direction of the vehicle and pivotally connected at the inner end to the subframe (3) by a very soft and large compliant bushing (17) and at the outer end to the wheel carrier (14) or to the lower wishbone (10) by a spherical joint (18); a steering tie rod (19) arranged in the lateral direction of the vehicle and connected at the outer end to the wheel carrier (14) by a spherical joint (20) and at the inner end to the subframe by another spherical joint (21) controlled by the steering gearbox or, in the case of a non steering rear suspension, by a compliant bushing controlling the wheel toe angle under loads induced by dynamic maneuvers; a shock absorber (22) crossing the upper wishbone (6) connected to the body by an anti-vibration upper mount (23) and to the lower wishbone by a spherical joint (24).

2. A suspension system, according to claim 1, **characterized in that** said upright carrier (1) rotates about a swivel axis (25), said swivel axis (25) intercepting the extension line (26) connecting spherical joints (9, 13) of said wheel carrier (14) in a pivot point (27) lying in the ground below the wheel contact patch; the steering axis (28) being coplanar to said swivel axis (25) and to said extension line (26) and heading to said pivot point (27).

3. A suspension system, according to claim 2, **characterized in that** said front link (16) controls the angular travel of said upright carrier (1) under longitudinal loads induced by road shock inputs or by braking maneuvers, thus obtaining wheel travel characteristics very compliant for the loads acting on the wheel centre and very stiff for the loads acting at the ground level.

4. A suspension system, according to claim 3, **characterized in that** said front link (16) is pivotally connected with said wheel carrier (14) and the projection (32) of its centre line on the plane of said swivel axis (25) and said extension line (26) defines a virtual steering axis (28), i.e. the instantaneous rotation axis of the wheel during steering actions, as the line connecting said projection point (32) and said pivot point (27); said virtual steering axis can be located close to the plane of the wheel without any impairment there of the installation of a large brake, thus lowering the steering wheel reactions to longitudinal road load inputs.

5. A suspension system, according to claim 1, **characterized in that** said front link (16) is joined to said lower wishbone (10); the steering axis being physical, i.e. identified by joints, and defined by said extension line (26) connecting spherical joints (9, 13) of said wheel carrier (14).

6. A suspension system, according to claim 1, **characterized in that** said steering tie rod (19) is pivotally connected with said wheel carrier (14) and the projection of its centre line on the plane of said swivel axis (25) and said extension line (26) defines the axis (33) of rotation of the wheel under longitudinal loads, induced by road shock inputs or by braking maneuvers, as the line connecting said projection point, eventually point-infinity, and said pivot point (27), said rotation axis (33) being arranged approximately in the lateral direction of the vehicle and headed to said pivot point (27), lying in the ground below the wheel (15) at a distance from the contact patch such as to ensure a target value of the ratio between the longitudinal stiffness of the suspension at the wheel centre and the longitudinal stiffness at the contact patch.

7. A suspension system, according to claim 6, **characterized in that** said pivot point (27) lies in the ground below the wheel (15) at a distance from the contact patch such as to ensure, during steering action, required changes for the geometry of the virtual steering axis (28) according to optimal control criteria for steering behaviour.

8. A suspension system, according to claim 1, **characterized in that** said upright carrier (1) integrates the springing device of the suspension: said upper wishbone (6) being extended inside the upright carrier (1) to create a lever on which an upper plate (29) of a spring (30) is fixed; said lower wishbone (10) supporting a lower plate (31), aligned with the axis (25) of the upright carrier (1); since the fulcrums of the upper and lower wishbones (6, 10) are on the opposite sides of the upright carrier (1), during the vertical travel of the wheel (15) upwards, said spring (30) is shortened by the travels of both plates (29, 31), the ratio between spring travel and wheel travel being equal to the sum of the lever ratios of the upper wishbone (6) and lower wishbone (10).

9. A suspension system, according to claim 8, **characterized in that** it comprises an upper compliant mount (4) fixing the upright carrier (1) to said body (2), consisting of a conical compliant bushing, coaxial to the upright carrier (1), designed to withstand the upwards axial forces coming from road induced vertical load inputs and furthermore having a high stiffness in both the radial directions and a low torsional stiffness such as to allow for a limited rotation angle around its own axis.

10. A suspension system, according to claim 8, **characterized in that** it comprises a lower compliant mount (5) consisting of a cylindrical bushing very stiff in both radial directions and fixed through the outer sleeve to the subframe (3) and through the inner sleeve to the upright carrier (1); said bushing presenting a low torsional stiffness such as to allow a limited rotation angle around its axis, and a low axial stiffness in order to recover the assembly tolerances.

11. A suspension system, according to claim 8, **characterized in that** it comprises a compliant mounting system consisting of two or more small bushings coupling the upright carrier (1) to the subframe (3), arranged such that their radial axes of max stiffness intercept each other on the centre of said larger bushing (5), said system having the same compliance characteristics and functions as said bushing (5), that it fully replaces.

12. A suspension system, according to claim 8, **characterized in that** said spring (30) is an air spring such as to ensure the individual control of the ride height of each wheel and a progressive stiffness characteristic resulting in excellent isolation from road induced vertical inputs, and ultimately outstanding ride comfort of the vehicle.

## Patentansprüche

1. Aufhängungssystem für Kraftfahrzeuge, insbesondere für die Vorderachse, umfassend eine Radanordnung (14, 15); einen Doppelschwingarm: einen oberen Querlenker (6) und einen unteren Querlenker (10), die beide in der seitlichen Richtung des Fahrzeugs angeordnet sind, die jeweils an dem äußeren Ende mit dem Radträger (14) durch ein Kugelgelenk (9, 13) verbunden sind und schwenkbar an dem inneren Ende an einem aufrechten Träger (1) montiert sind, **dadurch gekennzeichnet, dass** es frei um seine Schwenkachse (25) schwenken kann, welche elastisch an der Automobilkarosserie/Hilfsrahmen (2, 3) befestigt ist; ein vorderes Verbindungsglied (16), das horizontal ist und in einem Winkel mit der Längsrichtung des Fahrzeugs angeordnet ist und schwenkbar an dem inneren Ende mit dem Hilfsrahmen (3) durch eine sehr weiche und große, nachgiebige Buchse (17) und an dem äußeren Ende mit dem Radträger (14) oder dem unteren Querlenker (10) durch ein Kugelgelenk (18) verbunden ist; eine Lenkzugstange (19), die in der seitlichen Richtung des Fahrzeugs angeordnet ist und an dem äußeren Ende mit dem Radträger (14) durch ein Kugelgelenk (20) und an dem inneren Ende mit dem Hilfsrahmen durch ein anderes Kugelgelenk (21), das durch das Lenkgetriebegehäuse gesteuert wird, oder, im Falle einer nicht-lenkenden hinteren Aufhängung, durch eine nachgiebige Buchse, die den Radspurwinkel unter Lasten steuert, die durch dynamische Manöver hervorgerufen werden, verbunden ist; einen Stoßdämpfer (22), der den oberen Querlenker (6) überquert, der mit der Karosserie durch eine obere Schwingungsdämpfung (23) und an dem unteren Querlenker durch ein Kugelgelenk (24) verbunden ist.

2. Aufhängungssystem nach Anspruch 1, **dadurch gekennzeichnet, dass** sich der aufrechte Träger (1) um eine Schwenkachse (25) dreht, wobei die Schwenkachse (25) die Verlängerungslinie (26), die die Kugelgelenke (9, 13) des Radträgers (14) verbindet, in einem Schwenkpunkt (27) kreuzt, der auf dem Boden unterhalb der Radaufstandsfläche liegt; wobei die Lenkachse (28) koplanar zu der Schwenkachse (25) und zu der Verlängerungslinie (26) ist und sich zu dem Schwenkpunkt (27) hin erstreckt.

3. Aufhängungssystem nach Anspruch 2, **dadurch gekennzeichnet, dass** das vordere Verbindungsglied (16) die Winkelauslenkung des aufrechten Trägers (1) unter Längslasten, die durch Fahrbahnstoßübertragungen oder durch Bremsmanöver hervorgerufen werden, steuert, wodurch Radwegmerkmale erhalten werden, die für die Lasten, die auf den Radmittelpunkt wirken, sehr flexibel sind, und für die Lasten, die auf der Bodenebene wirken, sehr steif sind.

4. Aufhängungssystem nach Anspruch 3, **dadurch gekennzeichnet, dass** das vordere Verbindungsglied (16) schwenkbar mit dem Radträger (14) verbunden ist und der Vorsprung (32) ihrer Mittellinie auf der Ebene der Schwenkachse (25) und der Verlängerungslinie (26) eine virtuelle Lenkachse (28) definiert, d. h., die Momentandrehachse des Rads während Lenkaktionen, als die Linie, die den Vorsprungspunkt (32) und den Schwenkpunkt (27) verbindet; wobei die virtuelle Lenkachse in der Nähe der Ebene des Rads ohne irgendeine Beeinträchtigung der Installation einer großen Bremse dort liegen kann, wodurch die Lenkradreaktionen auf Längsfahrbahnlastübertragungen verringert werden.

5. Aufhängungssystem nach Anspruch 1, **dadurch gekennzeichnet, dass** das vordere Verbindungsglied (16) mit dem unteren Querlenker (10) verbunden ist; wobei die Lenkachse physisch ist, d. h., durch Gelenke gekennzeichnet ist, und durch die Verlängerungslinie (26) definiert ist, die die Kugelgelenke (9, 13) des Radträgers (14) verbindet.

6. Aufhängungssystem nach Anspruch 1, **dadurch gekennzeichnet, dass** die Lenkzugstange (19) schwenkbar mit dem Radträger (14) und dem Vorsprung ihrer Mittellinie auf der Ebene der Schwenkachse (25) verbunden ist und die Verlängerungslinie (26) die Drehachse (33) des Rads unter Längslasten, die durch Fahrbahnstoßübertragungen oder durch Bremsmanöver hervorgerufen werden, als die Linie, die den Vorsprungspunkt, eventuell mit unendlichem Punkt, und den Schwenkpunkt (27) verbindet, definiert, wobei die Rotationsachse (33) ungefähr in der seitlichen Richtung des Fahrzeugs angeordnet ist und sich zu dem Schwenkpunkt (27) hin erstreckt, der auf dem Boden unterhalb des Rads (15) in einer Entfernung von der Aufstandsfläche liegt, um einen Zielwert des Verhältnisses zwischen der Längssteifigkeit der Aufhängung an dem Radmittelpunkt und der Längssteifigkeit an der Aufstandsfläche sicherzustellen.

7. Aufhängungssystem nach Anspruch 6, **dadurch gekennzeichnet, dass** der Schwenkpunkt (27) auf dem Boden unterhalb des Rads (15) in einer Entfernung von der Aufstandsfläche liegt, um während der Lenkaktion, benötigte Veränderungen für die Geometrie der virtuellen Lenkachse (28) gemäß optimalen Steuerkriterien für das Lenkverhalten sicherzustellen.

8. Aufhängungssystem nach Anspruch 1, **dadurch gekennzeichnet, dass** in dem aufrechten Träger (1) die Federvorrichtung der Aufhängung integriert ist; wobei der obere Querlenker (6) innerhalb des aufrechten Trägers (1) verlängert ist, um einen Hebel zu erzeugen, auf welchem eine obere Platte (29) einer Feder (30) befestigt ist; wobei der untere Querlenker (10) eine untere Platte (31) stützt, die mit der Achse (25) des aufrechten Trägers (1) ausgerichtet ist; da die Drehpunkte des oberen und des unteren Querlenkers (6, 10) auf den gegenüberliegenden Seiten des aufrechten Trägers (1) liegen, wird während dem vertikalen Weg des Rads (15) nach oben die Feder (30) durch die Wege beider Platten (29, 31) verkürzt, wobei das Verhältnis zwischen dem Federweg und dem Radweg der Summe der Hebelverhältnisse des oberen Querlenkers (6) und des unteren Querlenkers (10) entspricht.

9. Aufhängungssystem nach Anspruch 8, **dadurch gekennzeichnet, dass** es eine obere nachgiebige Befestigung (4) umfasst, die den aufrechten Träger (1) an der Karosserie (2) befestigt, die aus einer kegelförmigen nachgiebigen Buchse besteht, die koaxial zu dem aufrechten Träger (1) ist, die ausgelegt ist, um den axialen Aufwärtskräften standzuhalten, die von durch die Fahrbahn hervorgerufenen vertikalen Lastübertragungen stammen, und ferner eine hohe Steifigkeit in beiden radialen Richtungen und eine geringe Torsionssteifigkeit, wie etwa zum Erlauben eines begrenzten Drehwinkels um ihre eigene Achse herum, aufweisen.

10. Aufhängungssystem nach Anspruch 8, **dadurch gekennzeichnet, dass** es eine untere nachgiebige Befestigung (5) umfasst, die aus einer zylinderförmigem Buchse besteht, die in beiden radialen Richtungen sehr steif ist und durch die äußere Manschette an dem Hilfsrahmen (3) und durch die innere Manschette an dem aufrechten Träger (1) befestigt ist; wobei die Buchse eine geringe Torsionssteifigkeit, wie etwa zum Erlauben eines begrenzten Drehwinkels um ihre Achse herum, und eine geringe axiale Steifigkeit, um die Baugruppentoleranzen wiederzugewinnen, aufweist.

11. Aufhängungssystem nach Anspruch 8, **dadurch gekennzeichnet, dass** es ein nachgiebiges Befestigungssystem umfasst, das aus zwei oder mehreren kleinen Buchsen besteht, die den aufrechten Träger (1) mit dem Hilfsrahmen (3) koppeln, die derart angeordnet sind, dass ihre radialen Achsen mit maximaler Steifigkeit einander auf dem Mittelpunkt der größeren Buchse (5) kreuzen, wobei das System dieselben Nachgiebigkeitsmerkmale und Funktionen wie die Buchse (5) aufweist, die es vollständig ersetzt.

12. Aufhängungssystem nach Anspruch 8, **dadurch gekennzeichnet, dass** die Feder (30) eine Luftfeder ist, wie etwa zum Sicherstellen der individuellen Steuerung der Fahrhöhe jedes Rads und eines progressiven Steifigkeitsmerkmals, was zu einer exzellenten Isolierung von durch die Fahrbahn hervorgerufenen vertikalen Kraftübertragungen und letztendlich einem hervorragenden Fahrkomfort des Fahrzeugs führt.

## Revendications

1. Système de suspension pour véhicules automobiles, en particulier pour l'essieu avant, comprenant un assemblage de roues (14, 15) ; une paire de bras oscillants: un triangle supérieur (6) et un triangle inférieur (10), tous deux disposés dans la direction latérale du véhicule, chacun d'eux étant raccordé à l'extrémité extérieure au porte-roue (14) au moyen d'un joint sphérique (9, 13) et monté de manière pivotante à l'extrémité intérieure sur un porteur vertical (1), **caractérisée en ce qu'il** est libre de pivoter autour de son axe de pivotement (25) qui est fixé élastiquement au châssis (2) et au sous-châssis (3) de la voiture; une biellette avant (16) horizontale et disposée en vue de dessus obliquement par rapport à la direction longitudinale du véhicule et raccordée en articulation à l'extrémité intérieure, au sous-châssis (3) par une douille élastique(17) très souple et de grand taille et, à l'extrémité extérieure, au porte-roue (14) ou au triangle inférieur (10) par un joint sphérique (18) ; un bras de direction (19) disposé dans la direction latérale du véhicule et raccordé à son extrémité extérieure au porte-roue (14) par un joint sphérique (20) et à son extrémité intérieure au sous-châssis par un autre joint sphérique (21) commandée par le boîtier de direction ou, dans le cas d'une suspension arrière non directrice, par une douille élastique contrôlant l'angle de pincement de la roue sous les charges induites par les manœuvres dynamiques ; un amortisseur (22) traversant le triangle supérieur (6) relié au châssis par une monture supérieure anti-vibration (23) et au triangle inférieur par une articulation sphérique (24).

2. Système de suspension, selon la revendication 1, **caractérisé en ce que** ledit porteur vertical (1) tourne autour d'un axe de pivotement (25), ledit axe de pivotement (25) interceptant la ligne d'extension (26) reliant les joint sphériques (9, 13) dudit porte-roue (14) à un point de pivot (27) situé dans le sol au-dessous de la surface de contact de la roue ; l'axe de direction (28) étant coplanaire audit axe de pivotement (25) et à ladite ligne d'extension (26) et croisent ledit point de pivot (27).

3. Système de suspension selon la revendication 2, **caractérisé en ce que** ladite biellette avant (16) contrôle le déplacement angulaire dudit porteur vertical (1) sous des charges longitudinales induites par des impacts sur la route ou par des manœuvres de freinage, obtenant ainsi des caractéristiques de flexibilité longitudinale de suspension très douces pour les charges agissant sur le centre de la roue et convenablement plus rigides pour les charges agissant au niveau du sol.

4. Système de suspension selon la revendication 3, **caractérisé en ce que** ladite biellette avant (16) est raccordée par une articulation sphérique audit porte-roue (14) et la projection (32) de sa ligne médiane comprenant ledit axe de pivotement (25) et ladite ligne d'extension (26) définit l'axe virtuel de direction (28), c'est-à-dire l'axe de rotation instantanée de la roue pendant les actions de direction, comme la ligne raccordant ledit point de projection (32) et ledit point de pivot (27). Ledit axe virtuel de direction peut être situé près du plan médian de la roue sans aucune entrave à l'installation d'un grand frein, permettant ainsi de réduire les réactions du volant aux charges dynamiques longitudinales routiers.

5. Système de suspension, selon la revendication 1, **caractérisé en ce que** ladite biellette avant (16) est raccordée audit triangle inférieur (10) ; l'axe de direction devient physique, c'est-à-dire identifié par des joints, et défini par ladite ligne d'extension (26) reliant les joints sphériques (9, 13) dudit porte-roue (14).

6. Système de suspension selon la revendication 1, **caractérisé en ce que** ledit bras de direction (19) est raccordé par joint sphérique audit porte-roue (14) et la projection de sa ligne médiane sur le plan comprenant ledit axe de pivotement (25) et ladite ligne d'extension (26) définit l'axe (33) de rotation de la roue sous des charges longitudinales, induites par des impacts sur la route ou des manœuvres de freinage, comme la ligne reliant ledit point de projection sur ledit plan, éventuellement le point à l'infini comme illustré sur la figure, et ledit point de pivot (27). Ledit axe de rotation (33) étant approximativement disposé dans la direction latérale du véhicule et passant par ledit point de pivot (27), situé dans le sol au dessous de la roue (14) à une distance de la surface de contact de manière à assurer une valeur cible du rapport entre la rigidité longitudinale de la suspension au centre de la roue et la rigidité longitudinale au niveau de la surface de contact.

7. Système de suspension, selon la revendication 6, **caractérisé en ce que** ledit point de pivot (27) se trouve dans le sol au dessous la roue (14) à une distance de la surface telle qu'il assure, lors de l'action de direction, les changements appropriés de la géométrie de l'axe virtuel de direction (28) selon les critères de contrôle optimal du comportement de la direction.

8. Système de suspension, selon la revendication 1, **caractérisé en ce que** ledit porteur vertical (1) incorpore le dispositif de ressort de la suspension : ledit triangle supérieur (6) étant étendu à l'intérieur du porteur vertical (1) pour créer un levier auquel une plaque supérieure (29) du ressort (30) est fixée; ledit triangle inférieur (10) supportant une plaque inférieure (31), les deux plaques étant alignées avec l'axe (25) du porteur vertical (1). Puisque les pivots des triangles supérieur et inférieur (6, 10) sont situés sur des côtés opposés de l'axe du porteur vertical (1), lors du déplacement vertical de la roue (15) vers le haut, ledit ressort (30) est écourté par les courses en sens inverse des deux plaques (29, 31), le rapport entre la déflexion du ressort et le déplacement de la roue étant égal à la somme des rapports de levier des triangles supérieur (6) et inférieur (10).

9. Système de suspension selon la revendication 8, **caractérisé en ce qu'**il comprend une monture supérieure élastique (4) fixant le porteur vertical (1) audit châssis(2), comprenant une douille conique souple le long de son axe, en ligne avec le porteur vertical (1), conçue pour amortir les forces axiales vers le haute dues aux charges verticales dynamiques induites par la route et ayant en outre une rigidité élevée dans les deux directions radiales et une faible rigidité en torsion afin de permettre un angle de rotation limité autour de son axe.

10. Système de suspension selon la revendication 8, **caractérisé en ce qu'**il comprend une monture inférieure élastique(5) constituée d'une douille cylindrique très rigide dans les deux directions radiales et fixée par le manchon extérieur au sous-châssis (3) et par le manchon intérieur au porteur vertical (1) ; ladite douille présentant une faible rigidité en torsion afin à permettre un angle de rotation limité autour de son axe, et une faible rigidité axiale pour récupérer les tolérances de l'assemblage.

11. Système de suspension selon la revendication 8, **caractérisé en ce qu'**il comprend un système de monture flexible comprenant deux ou plusieurs petites douilles couplant le porteur vertical (1) au sous-châssis (3), disposées de telle sorte que leurs axes radiaux de rigidité maximale se croisent au centre de ladite grande douille (5), ledit système ayant les mêmes caractéristiques de flexibilité et les mêmes fonctions que ladite douille (5), qu'il remplace complètement.

12. Système de suspension selon la revendication 8, **caractérisé en ce que** ledit ressort (30) est un ressort pneumatique telle qu'il assure le contrôle individuel de la hauteur de roulement sur chaque roue et une caractéristique de rigidité progressive résultant en une excellente isolation des charges dynamiques verticales induites par la route, et finalement un confort de roulement exceptionnel du véhicule.
